# EUROPEAN PATENT SPECIFICATION

(11) **EP 3 715 519 B1**
(45) Date of publication and mention of the grant of the patent: **29.11.2023**
(21) Application number: 19802023.2
(22) Date of filing: 06.08.2019
(51) Int. Cl.: D04H 3/16

(54) **SPUNBOND NONWOVEN FABRIC, METHOD FOR MANUFACTURING SPUNBOND NONWOVEN FABRIC, AND EMBOSS ROLL**
SPINNVLIESSTOFF, VERFAHREN ZUR HERSTELLUNG EINES SPINNVLIESSTOFFES UND PRÄGEWALZE
TISSU NON TISSÉ FILÉ-LIÉ, PROCÉDÉ DE FABRICATION DE TISSU NON TISSÉ FILÉ-LIÉ ET ROULEAU GAUFREUR

(30) Priority: 25.01.2019 WO PCT/JP2019/002536
(43) Date of publication of application: 30.09.2020
(73) Proprietor: Mitsui Chemicals, Inc., Tokyo 104-0028 (JP)
(72) Inventor: OTA, Kosuke, Chiba 299-0265 (JP); KUNIMOTO, Naosuke, Chiba 299-0265 (JP); SHIMADA, Koichi, Chiba 299-0265 (JP); MOTOMURA, Shigeyuki, Chiba 299-0265 (JP); SUZUKI, Kenichi, Chiba 299-0265 (JP)
(74) Representative: Hoffmann Eitle
(86) International application number: PCT/JP2019/030966
(87) International publication number: WO 2020/152890

(56) References cited:
- WO-A1-2020/196663
- JP-A- H11 347 062
- JP-A- S57 112 454
- JP-A- 2004 113 489
- JP-A- 2015 108 213
- JP-A- 2015 108 213
- JP-A- 2016 005 545
- JP-A- 2016 041 858
- JP-A- 2016 041 858

## Description

### Technical Field

The present invention relates to a spunbonded non-woven fabric, a method of manufacturing a spunbonded non-woven fabric, and an embossing roll.

### Background Art

In recent years, non-woven fabrics have been widely used in various applications because the non-woven fabrics have been excellent in air permeability and flexibility. In the non-woven fabrics, therefore, various characteristics depending on the applications have been demanded, and improvement in the characteristics has been required.

In particular, long-fiber non-woven fabrics obtained by spunbonding have been applied to, for example, absorbent articles (paper diapers, sanitary napkins, and the like), medical materials (operating gowns, drapes, sanitary masks, bed sheets, medical gauze, base fabrics for fomentation materials, and the like), and the like. Applications such as absorbent articles and medical materials have had portions coming in direct contact with the skin and, therefore, have especially required high flexibility.

For example, Patent Documents 1 to 4 propose spunbonded non-woven fabrics to which various characteristics such as flexibility are applied.

### Citation List

### Patent Document

Patent Document 1: Japanese Patent Application Laid-Open (JP-A) No. S57-167442
Patent Document 2: JP-A No. H01-201567
Patent Document 3: JP-A No. H01-229871
Patent Document 4: International Publication No. WO 2007/091444
Patent Document 5: JP-ANo. 2015-108213
Patent Document 6: JP-ANo. 2016-41858
Patent Document 7: JP-ANo. 2016-5545

### SUMMARY OF INVENTION

### Technical Problem

In recent years, bulkiness and flexibility have been increasingly demanded in spunbonded non-woven fabrics. However, bulkiness and flexibility may have been insufficient for conventional spunbonded non-woven fabrics. Therefore, the fact is that further improvement is needed for improving the bulkiness and flexibility of a spunbonded non-woven fabric.

Further, in recent years, there have been a need for spunbonded non-woven fabrics to have, in addition to bulkiness and flexibility, excellent soft feel, fittability and the like when spunbonded non-woven fabrics are formed into pleats, i.e., to have low flexural rigidity (bending resistance).

Patent Document 5 discloses a non-woven fabric having excellent air permeability, and the manufacturing method thereof includes subjecting a spunbonded non-woven fabric to a three-dimensional shape imparting treatment using a pair of gear rolls. Although bulkiness can easily be obtained after a three-dimensional shape imparting treatment using engagement of teeth of gear rolls such as the three-dimensional shape imparting treatment described in Patent Document 5, the resultant protrusion-depression shape produces a resisting force against bending, as a result of which flexural rigidity tends to increase.

The method of manufacturing a non-woven fabric disclosed in Patent Document 6 includes, after preparing a side-by-side long-fiber non-woven web, adhering fibers to one another using hot air. Performing such a thermal entangling step using hot air after imparting the emboss shape increases resisting force against bending, as a result of which frexural rigidity of the non-woven fabric tends to increase.

In the manufacturing method disclosed in Patent Document 7, napping treatment is performed using a processing apparatus after a spunbonded non-woven fabric is produced through embossing treatment. Although such secondary processing tends to improve the texture, the irregularities formed by the napping treatment produces a resisting force against bending, as a result of which flexural rigidity tends to increase.

An object of the present disclosure is to provide a spunbonded non-woven fabric that is bulky and excellent in flexibility and that has sufficiently small flexural rigidity. In addition, an object of the present disclosure is to provide a method of manufacturing a spunbonded non-woven fabric that is bulky and excellent in flexibility and that has small flexural rigidity. Further, an object of the present disclosure is to provide an embossing roll capable of obtaining a spunbonded non-woven fabric that is bulky and excellent in flexibility and that has sufficiently small flexural rigidity.

### Solution to Problem

The present disclosure relates to a spunbonded non-woven fabric including a fiber of a thermoplastic polymer, the fabric having a thickness t, a compression work WC measured in a compression test by a KES method, a thickness TO measured in the compression test by the KES method at a pressure of 0.5 gf/cm², a thickness TM measured in the compression test by the KES method at a pressure of 50 gf/cm², a basis weight W, and a bending resistance BR_{MD} in a machine direction (MD) and a bending resistance BR_{CD} in a cross direction as measured in compliance with a 45° cantilever method defined in JIS-L1096: 2010, which satisfy the following conditions (A) to (F):
(A): t ≥ 0.30mm;
(B): WC ≥ 0.22 gf·cm/cm²;
(C): TO-TM ≥ 0.25 mm;
(D): W ≤ 30 g/m^{2;}
(E): BR_{MD} ≤ 40 mm; and
(F): BR_{CD} ≤ 25 mm,
wherein the fiber comprises a crimped fiber and
the spunbonded non-woven fabric is obtainable by a method comprising:
melt-spinning a thermoplastic polymer to form a continuous fiber assembly;
depositing the formed continuous fiber assembly on a movable trapping member to form a non-woven web; and
performing thermocompression bonding of the formed non-woven web by an embossing roll at which a projection and a recess are disposed, and in which an area ratio of the projection is from 5% to 18%, an emboss aspect ratio represented by a ratio of a depth from a top face of the projection to a bottom face of the recess with respect to an area of the top face of the projection is from 2.5 mm/mm² to 7.0 mm/mm², and a base material has a Rockwell hardness of 35 HRC or more.

It also relates to a method of manufacturing the spunbonded non-woven fabric including:
melt-spinning a thermoplastic polymer to form a continuous fiber assembly;
depositing the formed continuous fiber assembly on a movable trapping member to form a non-woven web; and
performing thermocompression bonding of the formed non-woven web by an embossing roll at which a projection and a recess are disposed, an area ratio of the projection is from 5% to 18%, an emboss aspect ratio represented by a ratio of a depth from a top face of the projection to a bottom face of the recess with respect to an area of the top face of the projection is from 2.5 mm/mm² to 7.0 mm/mm², and a base material has a Rockwell hardnesses of 35 HRC or more.

The present disclosure further relates to an embossing roll for performing thermocompression bonding of a non-woven web,
wherein a projection and a recess are disposed on the embossing roll, an area ratio of the projection is from 5% to 18%, an emboss aspect ratio represented by a ratio of a depth from a top face of the projection to a bottom face of the recess with respect to an area of the top face of the projection is from 2.5 mm/mm² to 7.0 mm/mm², and a base material has a Rockwell hardnesses of 35 HRC or more.

### Advantageous Effects of Invention

In accordance with the present disclosure, a spunbonded non-woven fabric that is bulky and excellent in flexibility and that has small flexural rigidity is provided. In addition, a method of manufacturing a spunbonded non-woven fabric that is bulky and excellent in flexibility and that has small flexural rigidity is provided. Further, an embossing roll capable of obtaining a spunbonded non-woven fabric that is bulky and excellent in flexibility and that has small flexural rigidity is provided.

### BRIEF DESCRIPTION OF DRAWINGS

Fig. 1 is a schematic view illustrating an example of an apparatus for manufacturing a spunbonded non-woven fabric layered body of the present disclosure.
Fig. 2 is a schematic view illustrating another example of the apparatus for manufacturing a spunbonded non-woven fabric layered body of the present disclosure.
Fig. 3 is a schematic view illustrating an example of an embossing roll of the present disclosure.
Fig. 4A is a cross-sectional view taken along the line A-A in a projection included in the embossing roll illustrated in Fig. 3.
Fig. 4B is a cross-sectional view taken along the line B-B in a projection included in the embossing roll illustrated in Fig. 3.
Fig. 5 is a perspective view of projections included in the embossing roll illustrated in Fig. 3, viewed from a rotation direction.

### DESCRIPTION OF EMBODIMENTS

An example of a preferred aspect of a spunbonded non-woven fabric of the present disclosure will be described in detail below.

In the present disclosure, a numerical range expressed by "x to y" includes the values of x and y in the range as the minimum and maximum values, respectively.

The spunbonded non-woven fabric of the present disclosure includes a fiber of a thermoplastic polymer, the fabric having a thickness t, a compression work WC measured in a compression test by a KES method, a thickness TO measured in the compression test by the KES method at a pressure of 0.5 gf/cm², a thickness TM measured in the compression test by the KES method at a pressure of 50 gf/cm², a basis weight W, and a bending resistance BR_{MD} in a machine direction (MD) and a bending resistance BR_{CD} in a cross direction as measured in compliance with a 45° cantilever method defined in JIS-L1096: 2010, which satisfy the following conditions (A) to (F):
(A): t ≥ 0.30mm;
(B): WC ≥ 0.22 gf·cm/cm²;
(C): TO-TM ≥ 0.25 mm;
(D): W ≤ 30 g/m^{2;}
(E): BR_{MD} ≤ 40 mm; and
(F): BR_{CD} ≤ 25 mm.

The KES (Kawabata Evaluation System) method is one of methods of measuring and objectively evaluating the texture of a non-woven fabric.

The compression work WC, the thickness TO at a pressure of 0.5 gf/cm², and the thickness TM at a pressure of 50 gf/cm² are measured by the KES method using a compression testing machine KES-FB3-A manufactured by KATO TECH CO., LTD. Specifically, a sample is compressed from 0 gf/cm² to a maximum pressure of 50 gf/cm² at a compression deformation speed of 0.020 mm/sec between steel pressure plates having a circular plane having a compression area of 2 cm², and the measurement is performed while undoing the compression.

The compression work WC represents a compression work in the compression test by the KES method. In the present disclosure, a WC of less than 0.22 gf·cm/cm² results in the poor flexibility of the spunbonded non-woven fabric. In contrast, the higher numerical value of WC results in a greater compression work, and therefore exhibits superior flexibility. The preferred lower limit of WC is 0.24 gf·cm/cm² or more, and the more preferred lower limit of WC is 0.26 gf·cm/cm² or more. The upper limit of WC is not particularly limited as long as the upper limit is in a range satisfying the conditions (A), (C), and (D). Examples of the upper limit of WC include 1.00 gf·cm/cm² or less.

The thickness TO at a pressure of 0.5 gf/cm² is a thickness at a pressure of 0.5 gf/cm² in the compression test by the KES method, and represents an initial thickness. TO is preferably 0.40 mm or more, and more preferably 0.50 mm or more.

The thickness TM at a pressure of 50 gf/cm² is a thickness at a pressure of 50 gf/cm² in the compression test by the KES method, and represents a thickness in maximum compression. TM is preferably 0.10 mm or more, and more preferably 0.15 mm or more.

TO-TM is a difference between the TO and the TM. The more the TO-TM is, the superior the bulkiness is. The preferred lower limit of TO-TM is 0.25 mm or more, and the more preferred lower limit of TO-TM is 0.30 mm or more. The upper limit of TO-TM is not particularly limited as long as the upper limit is in a range satisfying the conditions (A), (B), and (D). Examples of the upper limit of TO-TM include 1.00 mm or less.

The thickness t of the spunbonded non-woven fabric of the present disclosure is 0.30 mm or more. The thickness is preferably 0.35 mm or more from the viewpoint of improvement in flexibility. The upper limit of the thickness t is not particularly limited, and may be, for example, 1.00 mm or less.

The basis weight W of the spunbonded non-woven fabric of the present disclosure is 30 g/m² or less. The basis weight W may be 15 g/m² or less. The lower limit of the basis weight W is not particularly limited as long as the lower limit is in a range in which flexibility is not degraded. The lower limit may be, for example, 10 g/m² or more.

In a method of measuring the thickness, the thickness may be measured in conformity with JIS L 1096: 2010. Specific methods of measuring the thickness and the basis weight will be explained in Examples described later.

The bending reistance BR_{MD} of the spunbonded non-woven fabric according to the present disclosure in the machine direction (MD) as measured in compliance with the 45° cantilever method defined in JIS-L1096:2010 is 40 mm or less. The bending reistance BR_{CD} of the spunbonded non-woven fabric in the cross direction (CD) is 25 mm or less. From the viewpoint of decreasing the bending reistance, BR_{MD} is preferably 35 mm or less, and more preferably 33 mm or less. From a similar viewpoint, BR_{CD} is preferably 23 mm or less, and more preferably 18 mm or less.

A specific method for measuring the bending reistance is described in the after-mentioned Examples.

A resin for forming the spunbonded non-woven fabric is not particularly limited as long as the resin is a resin enabling a non-woven fabric to be manufactured by spunbonding. Specific examples of the resin include an olefinic polymer, a polyester-based polymer, and a polyamide-based polymer. Among such resins, an olefinic polymer is preferred, and a propylene-based polymer is more preferred, from the viewpoint of excellent flexibility. The olefinic polymer is a polymer including an olefin as a structural unit. Examples of the olefinic polymer include a homopolymer or copolymer of an α-olefin such as ethylene, propylene, 1-butene, 1-hexene, 4-methyl-1-pentene or 1-octene. More specific examples thereof include crystalline olefinic polymers such as: ethylenic polymers such as low-density polyethylene produced by the high-pressure process, linear low-density polyethylene (also referred to as LLDPE: a random copolymer of ethylene and an α-olefin), and high-density polyethylene; propylen-based polymers such as a propylene homopolymer and a copolymer of propylene and an α-olefin; 1-butene-based polymers such as a 1-butene homopolymer and a copolymer of 1-butene and an α-olefin; 4-methyl-1-pentene-based polymers such as a 4-methyl-1-pentene homopolymer and a copolymer of 4-methyl-1-pentene and an α-olefin. In particular, the propylene-based polymer is a polymer including a largest content of propylene as a structural unit, and examples of the propylene-based polymer include a propylene homopolymer and a copolymer including a largest content of propylene.

Such propylene-based polymers are preferably, for example, a homopolymer of propylene, and a propylene/α-olefin random copolymer (for example, a random copolymer of propylene and one or more α-olefins having from 2 to 8 carbon atoms). Specific examples of preferred α-olefins which copolymerize with propylene include ethylene, 1-butene, 1-pentene, 1-hexene, 1-octene, and 4-methyl-1-pentene, from the viewpoint of excellent flexibility. The content of α-olefin in the propylene/α-olefin random copolymer is not particularly limited, and is, for example, preferably from 1% by mol to 10% by mol, and more preferably from 1% by mol to 5% by mol.

The melting point (Tm) of the propylene-based polymer may be 125°C or more, and may be from 125°C to 165°C. The melt flow rate (MFR) (ASTM D-1238, 230°C, a load of 2160 g) may be from 10 g/10 minutes to 100 g/10 minutes, and may be from 20 g/10 minutes to 70 g/10 minutes.

The propylene-based polymer can be obtained typically by homopolymerizing propylene alone or copolymerizing propylene and a small amount of an α-olefin via slurry polymerization, vapor-phase polymerization or bulk polymerization using a Ziegler-Natta catalyst, which is a combination of a titanium-containing transition metal component in the solid state and an organic metal component, or a metallocene catalyst that is composed of a compound of a transition metal in the Groups 4 to 6 of the Periodic Table having at least one cyclopentadienyl skeleton and a promoter component.

The propylene-based polymer may include a commonly used additive, if necessary. Examples of the additive include an antioxidant, a weathering stabilizer, a light stabilizer, an antistatic agent, a hydrophilization agent, an anti-fogging agent, an anti-blocking agent, a lubricant, a nucleating agent, and a pigment.

The fiber for forming the spunbonded non-woven fabric may be a fiber including one thermoplastic polymer, or may be a composite fiber including two or more thermoplastic polymers. The spunbonded non-woven fabric includes a crimped fiber from the viewpoint of allowing the spunbonded non-woven fabric to be bulky and excellent in flexibility and to have a smaller flexural rigidity. The number of crimps of the crimped fiber is not particularly limited, and examples thereof include not less than 5 crimps/25 mm. The number of crimps is preferably not less than 20 crimps/25 mm, and more preferably not less than 25 crimps/25 mm, from the viewpoint of allowing the spunbonded non-woven fabric to be bulky and excellent in flexibility and to have a smaller flexural rigidity. The crimped fiber may be, for example, a composite fiber such as a side-by-side type composite fiber or a core-sheath type composite fiber.

In a case in which the spunbonded non-woven fabric includes a crimped fiber, and the crimped fiber is a side-by-side type composite fiber or a core-sheath type composite fiber, preferred examples of the crimped fiber include the following aspects. Such preferred examples include an aspect in which a first thermoplastic polymer component and a second thermoplastic polymer component are included, the melting point of the first thermoplastic polymer component is higher than the melting point of the second thermoplastic polymer component by 5°C or more, and the mass ratio of first thermoplastic polymer component/second plastic resin component is from 5/95 to 95/5 (mass ratio) (more preferably from 5/95 to 50/50 (mass ratio), still more preferably from 5/95 to 30/70 (mass ratio); the mass ratio representing a ratio of core part to sheath part when the crimped fiber is a core-sheath type composite fiber). The first thermoplastic polymer component and the second thermoplastic polymer component may be propylene-based polymers. The crimped fiber included in the spunbonded non-woven fabric is obtained by performing composite melt spinning by spunbonding. It is preferable that the first thermopolastic resin component is a propylene homopolymer or a mixture of a propylene homopolymer and a propylene-ethylene random copolymer, and that the second thermoplastic resin component is a propylene-ethylene random copolymer.

The average fiber diameter of the fiber forming the spunbonded non-woven fabric is preferably in a range of from 5 µm to 20 µm from the viewpoint of allowing the spunbonded non-woven fabric to be bulky and excellent in flexibility. The lower limit of the average fiber diameter may be 7 µm or more. The upper limit of the average fiber diameter is more preferably 19 µm or less, and still more preferably 18 µm or less.

The fineness of the fiber forming the spunbonded non-woven fabric is preferably in a range of from 0.2 dtex to 6.0 dtex from the viewpoint of allowing the spunbonded non-woven fabric to be bulky and excellent in flexibility. The upper limit of the fineness is more preferably 4.0 dtex or less, still more preferably 3.0 dtex or less, and still more preferably 2.5 dtex or less.

The spunbonded non-woven fabric of the present disclosure may include a pressure bonding portion and a non- pressure bonding portion from the viewpoint of being bulky and excellent in flexibility and having a smaller flexural rigidity. The area ratio of the pressure bonding portion is preferably from 5% to 18%. The more preferred area ratio of the pressure bonding portion is 7% or more and 15% or less. The area ratio of the pressure bonding portion is set at the rate of the area of a thermocompression bonding portion with respect to the area of an observed non-woven fabric in a case in which a test piece having a size of 10 mm × 10 mm is sampled from the spunbonded non-woven fabric, and a surface of the test piece, which has come into contact with the embossing roll, is observed with an electron microscope (magnification: 100 times).

The spunbonded non-woven fabric of the present disclosure may be a spunbonded non-woven fabric layered body depending on a target application as long as the spunbonded non-woven fabric layered body satisfies the conditions (A) to (F) described above. In other words, the spunbonded non-woven fabric layered body of the present disclosure satisfies the conditions (A) to (F). Specifically, the layered structure of the spunbonded non-woven fabric may be a spunbonded non-woven fabric layered body in which the same spunbonded non-woven fabrics are layered one on another, or may be a spunbonded non-woven fabric layered body in which different spunbonded non-woven fabrics are layered one on another. The details of the definitions of the conditions (A) to (F), preferred definitions, characteristics, examples, and the like of the spunbonded non-woven fabric layered body are similar to the details of the definitions of the conditions (A) to (F), preferred definitions, characteristics, examples, and the like of the spunbonded non-woven fabric described above.

The spunbonded non-woven fabric of the present disclosure or the spunbonded non-woven fabric layered body of the present disclosure may be affixed to a material such as, for example, a knitted fabric, a woven fabric, a non-woven fabric other than spunbonded non-woven fabrics, or a film (including a sheet), depending on a purpose.

Examples of applications of the spunbonded non-woven fabric and spunbonded non-woven fabric layered body of the present disclosure include various applications such as sanitation materials, medical materials, and packaging materials. Examples of sanitation materials to which the spunbonded non-woven fabric and spunbonded non-woven fabric layered body of the present disclosure are applied include various sanitation materials. Specific examples thereof include disposable diapers, disposable pants, sanitary napkins, bladder control pads, pet sheets, and disposable masks, and the sanitation materials can be applied as such materials. In addition, the sanitation materials can also be applied as disposable operating gowns, rescue gowns, medical gowns, surgical caps, disposable caps, medical materials such as medical films and sheets, and packaging materials.

A preferred example of a manufacturing method of obtaining the spunbonded non-woven fabric of the present disclosure will be described below.

A method of manufacturing the spunbonded non-woven fabric of the present disclosure includes the following steps of:
melt-spinning a thermoplastic polymer to form a continuous fiber assembly;
depositing the formed continuous fiber assembly on a movable trapping member to form a non-woven web; and
performing thermocompression bonding of the formed non-woven web by an embossing roll at which a projection and a recess are disposed, the area ratio of the projection is from 5% to 18%, an emboss aspect ratio represented by the ratio of a depth from the top face of the projection to the bottom face of the recess with respect to the area of the top face of the projection is from 2.5 mm/mm² to 7.0 mm/mm², and a base material has a Rockwell hardnesses of 35 HRC or more.

By including the above steps, the method of manufacturing the spunbonded non-fabric of the present disclosure can provide the spunbonded non-woven fabric that is bulky and excellent in flexibility and that has small flexural rigidity. In particular, in the method of manufacturing the spunbonded non-woven fabric of the present disclosure, a spunbonded non-woven fabric that is bulky and excellent in flexibility can be obtained without performing secondary processing after the thermocompression using the embossing roll. Moreover, since the secondary processing has not been performed, the spunbonded non-woven fabric obtained also has small flexural rigidity.

The method of manufacturing the spunbonded non-woven fabric of the present disclosure enables stable manufacture even when applied to high-speed manufacturing with a manufacturing rate of, for example, more than 500 m/min.

The base material of the embossing roll may have a Rockwell hardness of from 35 HRC to 50 HRC. In the embossing roll, the ratio of the depth to the bottom face of the recess with respect to a distance between such projections adjacent to each other in a rotation direction (depth to bottom face of recess/distance between the projections adjacent to each other in rotation direction) may be from 0.4 mm/mm to 1.0mm/mm.

The non-woven web may be a non-woven web with at least two layers. In a case in which the non-woven web includes two layers, a lower-layer non-woven web (first non-woven web) may be formed by deposition on a movable trapping member, and an upper-layer non-woven web (second non-woven web) may be formed on the lower-layer non-woven web.

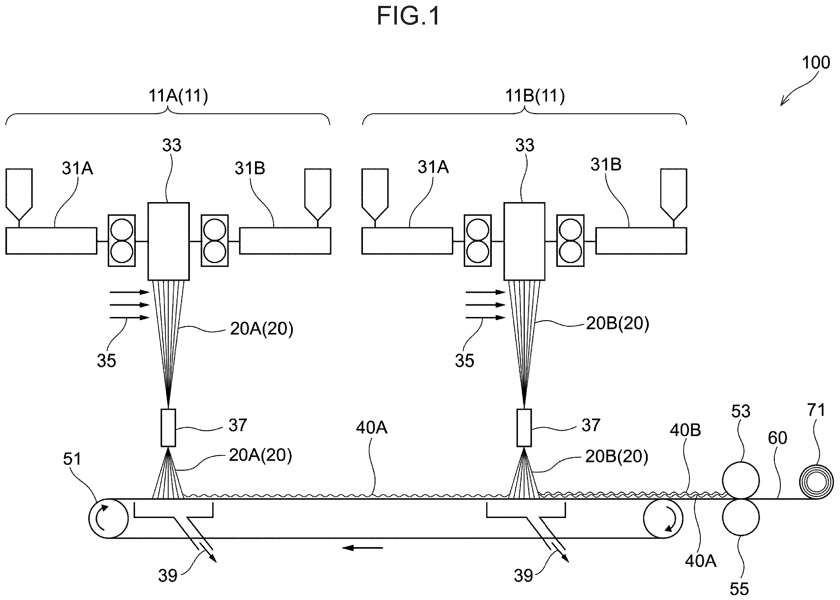

The method of manufacturing the spunbonded non-woven fabric of the present disclosure is described with reference to Fig. 1. Fig. 1 is a schematic view illustrating an example of an apparatus for manufacturing the spunbonded non-woven fabric layered body of the present disclosure. The spunbonding manufacturing apparatus 100 illustrated in Fig. 1 includes a first spinning unit 11A and a second spinning unit 11B. The first spinning unit 11A and the second spinning unit 11B include the same component portions. The same component portions in the first spinning unit 11A and the second spinning unit 11B are denoted by the same reference characters, and the descriptions thereof are omitted.

The spunbonding manufacturing apparatus 100 includes first extruders 31A that extrude a thermoplastic polymer, second extruders 31B that extrude a plastic polymer, spinnerets 33 that melt-spin melted thermoplastic polymers, ejectors 37 that draw continuous fiber assemblies 20 (20A, 20B) melt-spun from the spinnerets 33, a movable trapping member 51 that traps the drawn continuous fiber assemblies 20, suction units 39 for efficiently trapping the continuous fiber assemblies 20 on the movable trapping member 51, an embossing roll 53 and a flat roll 55 for thermocompression bonding, and a winder 71 that winds a spunbonded non-woven fabric layered body 60 subjected to the thermocompression bonding.

First, the thermoplastic polymer is melt-spin from the spinneret 33, to form the continuous fiber assembly 20A, in the first spinning unit 11A. In a case in which the continuous fiber assembly 20A is a crimped continuous fiber assembly, a first thermoplastic polymer may be extruded from the first extruder 31A, a second thermoplastic polymer may be extruded from the second extruder 31B, and composite spinning may be performed. Then, the continuous fiber assembly 20A is cooled by cooling air 35, and is drawn by the ejector 37. The drawn continuous fiber assembly 20A is efficiently trapped on the movable trapping member 51 by the suction unit 39 disposed in the lower portion of the trapping face of the movable trapping member 51, to form a first non-woven web 40A. In the second spinning unit 11B, the continuous fiber assembly 20B is also formed in a similar manner. The continuous fiber assembly 20B is layered on the first non-woven web 40A, whereby a second non-woven web 40B is formed to form a non-woven web having a layered structure. The first non-woven web 40A is a lower-layer non-woven web layer, and the second non-woven web 40B is an upper-layer non-woven web. The non-woven web having the layered structure is thermocompression-bonded by the embossing roll 53 and the flat roll 55, to obtain the spunbonded non-woven fabric layered body 60. Then, the spunbonded non-woven fabric layered body 60 is wound by the winder 71.

Thermocompression bonding using an embossing roll satisfying the following (1) to (3) as the embossing roll 53 is preferred for satisfying the above-described conditions (A) to (C), and (E) and (F), in the spunbonded non-woven fabric satisfying the condition (D) described above. The details of the embossing roll will be described later.
(1) Area ratio of projection: from 5% to 18%
(2) Emboss aspect ratio (ratio represented by ratio of depth from top face of projection to bottom face of recess with respect to area of top face of projection): from 2.5 mm/mm² to 7.0 mm/mm²
(3) Rockwell hardnesses of base material: 35 HRC or more

The example of the method of manufacturing the spunbonded non-woven fabric of the present disclosure has been described with reference to Fig. 1. However, the invention is not limited thereto. Only one spinning unit 11 may be included, or two or more spinning units 11 may be included. Both or either of a first extruder 31A and a second extruder 31B may be used.

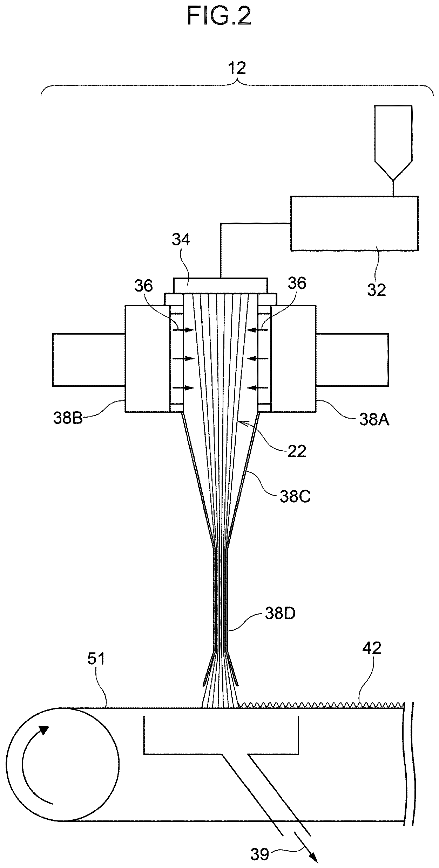

In the method of manufacturing the spunbonded non-woven fabric of the present disclosure, the manufacture may be performed in a manufacturing apparatus including a spinning unit 12 in which a cooling chamber illustrated in Fig. 2 has a closed-type structure. Fig. 2 is a schematic view illustrating another example of the apparatus for manufacturing the spunbonded non-woven fabric layered body of the present disclosure. Fig. 2 illustrates the apparatus in which the spinning units 11 (the spinning unit 11A and the spinning unit 11B) in the spunbonding manufacturing apparatus 100 illustrated in Fig. 1 are replaced with the spinning unit 12. In other words, the apparatus configuration other than the spinning units 11 is identical to that of the manufacturing apparatus illustrated in Fig. 1. The same component portions as those of the manufacturing apparatus illustrated in Fig. 1 are denoted by the same reference characters, and the descriptions thereof are omitted.

The spinning unit 12 includes a first extruder 32 that extrudes a thermoplastic polymer, a spinneret 34 that melt-spins a melted thermoplastic polymer, a cooling chamber 38C that cools a continuous fiber assembly 22 melt-spun from the spinneret 34, cooling air supply units 38A and 38B that supply cooling air 36, and a drawing unit 38D that draws the continuous fiber assembly 22.

In the spinning unit 12, the thermoplastic polymer is extruded to introduce the melted thermoplastic polymer into the spinneret 34. Then, the melted thermoplastic polymer is melt-spun from the spinneret 34. The melt-spun continuous fiber assembly 22 is introduced into the cooling chamber 38C. The continuous fiber assembly 22 is cooled by the cooling air 36 supplied from either or both of the cooling air supply unit 38A and the cooling air supply unit 38B. The cooled continuous fiber assembly 22 is introduced into the drawing unit 38D included downstream of the cooling chamber 38C. The drawing unit 38D is disposed in a bottleneck shape. The continuous fiber assembly 22 introduced into the drawing unit 38D is drawn by increasing the velocity of the cooling air in the bottleneck. The drawn continuous fiber assembly 22 is dispersed and trapped on a movable trapping member 51. The dispersed continuous fiber assembly 22 is efficiently trapped on the movable trapping member 51 by a suction unit 39 included in the lower portion of the trapping face of movable trapping member 51, to form a non-woven web 42.

The other example of the method of manufacturing the spunbonded non-woven fabric of the present disclosure has been described with reference to Fig. 2. However, the invention is not limited thereto. Only one spinning unit 12 may be included, or two or more spinning units 12 may be included. In Fig. 2, only the one extruder 32 is included. However, two or more extruders 32 may be included. The continuous fiber assemblies 20 melt-spun from the spinnerets 33 illustrated in Fig. 1 and the continuous fiber assembly 22 melt-spun from the spinneret 34 illustrated in Fig. 2 may be crimped continuous fiber assemblies.

The following description is given with the omitted reference characters.

In a case in which the melt-spun continuous fiber assembly is a crimped continuous fiber assembly, it is easy to obtain a spunbonded non-woven fabric that is bulky and excellent in flexibility. In the crimped continuous fiber assembly, the thermoplastic polymer may contain a first thermoplastic polymer component and a second thermoplastic polymer component of which the melting point is higher than that of the first thermoplastic polymer component by 5°C or more, and the first thermoplastic polymer component and the second thermoplastic polymer component may be compositely melt-spun.

The non-woven web may be a layered non-woven web with two or more layers, depending on a purpose. In a case in which the non-woven web includes two layers, a second non-woven web may be formed by depositing a first continuous fiber assembly on the movable trapping member to form a first non-woven web, and then depositing a second continuous fiber assembly on the first non-woven web. In a case in which both the first non-woven web and the second non-woven web include crimped fibers, it is easy to obtain a spunbonded non-woven fabric layered body that satisfies the conditions (A) to (F) described above. In the present disclosure, "non-woven web" is a concept encompassing not only a non-woven web with a single layer but also a layered non-woven web.

A temperature at which the non-woven web is thermocompression-bonded may be set depending on a fiber included in the non-woven web. In a case in which the fiber included in the non-woven web is, for example, a polypropylene-based polymer, the temperature may be in a range of from 100°C to 200°C. Examples of a linear pressure in the case of the thermocompression bonding include a linear pressure of from 100 N/cm to 1500 N/cm. Examples of a pressure bonding velocity in the case of the thermocompression bonding include a pressure bonding velocity of from 1 m/sec to 50 m/sec.

A projection and a recess are disposed on the embossing roll, and it is important to satisfy the following (1) to (3).
(1) The area ratio of the projection is from 5% to 18% (herein, the area ratio of the projection may be referred to as "emboss area ratio").
(2) An emboss aspect ratio is from 2.5 mm/mm² to 7.0 mm/mm².
   The emboss aspect ratio is represented by the ratio between the area of the top face of the projection and a depth from the top face of the projection to the bottom face of the recess (depth from top face of projection to bottom face of recess/area of top face of projection).
(3) The Rockwell hardnesses of a base material is 35 HRC or more.

A case in which the embossing roll satisfies the above (1) to (3) represents that the area of the top face of the projection is small, the projection is high, the projection has high hardness, and the embossing roll includes an appropriate amount of projections. In other words, the case represents that the embossing roll is provided with an appropriate amount of hard projections having long and narrow shapes. In the case of using an embossing roll provided with merely long and narrow projections in order to obtain the spunbonded non-woven fabric that satisfies the conditions (A) to (D) described above, the projections are prone to be damaged, thereby resulting in poor productivity. Therefore, it is difficult to obtain the above-described spunbonded non-woven fabric that is bulky and excellent in flexibility. Accordingly, the thermocompression bonding by the embossing roll satisfying all of the above (1) to (3) is useful for efficiently producing the spunbonded non-woven fabric that satisfies the above-described conditions (A) to (D) because of resulting in suppression of damage to projections disposed on the embossing roll.

The preferred lower limit of the area ratio of the projection is 7% or more in view of obtaining the spunbonded non-woven fabric that is bulky and excellent in flexibility. The preferred upper limit of the area ratio of the projection is 15% or less.

An emboss aspect ratio of less than 2.5 mm/mm² makes it difficult to obtain the spunbonded non-woven fabric that is bulky and excellent in flexibility. It is difficult to manufacture an embossing roll having an emboss aspect ratio of more than 7.0 mm/mm². The preferred upper limit of the emboss aspect ratio is 6.0 mm/mm² or less, and the more preferred upper limit of the emboss aspect ratio is 5.5 mm/mm² or less, from the viewpoint of manufacturing the spunbonded non-woven fabric that is bulky and excellent in flexibility and that has small flexural rigidity. The preferred lower limit of the emboss aspect ratio is 3.0 mm/mm² or more, and the more preferred lower limit of the emboss aspect ratio is 3.5 mm/mm² or more.

The base material of the embossing roll may have a Rockwell hardness of 35 HRC or more, preferably from 35 HRC to 50 HRC, from the viewpoint of obtaining the spunbonded non-woven fabric that is bulky and excellent in flexibility and that has small flexural rigidity. In a case in which the Rockwell hardness of the base material of the embossing roll is 35 HRC or more, the spunbonded non-woven fabric that is bulky and excellent in flexibility can be efficiently manufactured.

A method of manufacturing the embossing roll satisfying all the conditions (1) to (3) described above is not particularly limited, and the embossing roll is manufactured by a known method. Examples thereof include a method of obtaining an embossing roll satisfying the conditions (1) and (2) by subjecting a surface of a base material satisfying the condition (3) to treatment such as engraving treatment, electroforming treatment, sandblast treatment, electrical-discharge machining treatment, or etching treatment.

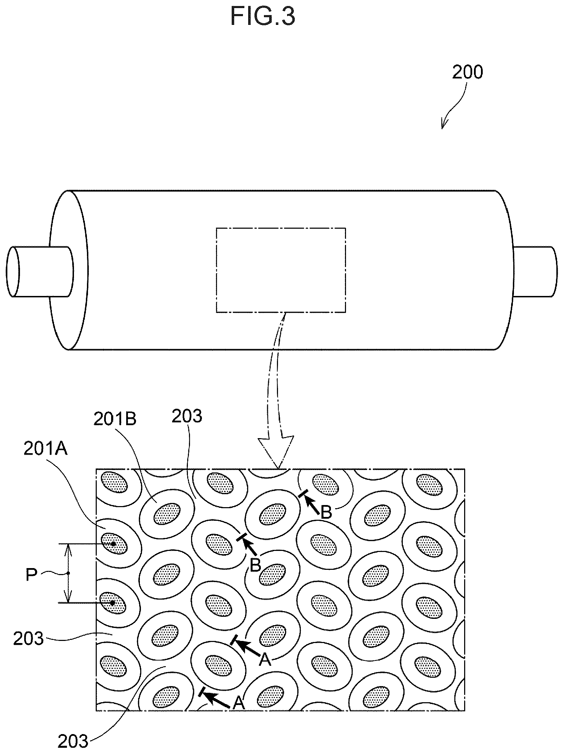

In the embossing roll, the ratio of a depth to the bottom face of the recess with respect to a distance between the projections adjacent to each other in a rotation direction (depth to bottom face of recess/distance between the projections adjacent to each other in rotation direction) is preferably from 0.4 mm/mm to 1.0mm/mm, from the viewpoint of obtaining the spunbonded non-woven fabric that is bulky and excellent in flexibility and that has small flexural rigidity. The more preferred lower limit of the ratio is 0.5 mm/mm or more, and the more preferred upper limit of the ratio is 0.8 mm/mm. The distance between the projections adjacent to each other in a rotation direction represents a center distance between the projections adjacent to each other (also referred to as "projection pitch") (see Fig. 3).

The projection pitch is preferably from 0.5 mm to 3.0 mm from the viewpoint of obtaining the spunbonded non-woven fabric that is bulky and excellent in flexibility and that has small flexural rigidity. The area of the top face of the projection is preferably from 0.1 mm² to 1.0 mm² from a similar viewpoint.

The shape of the top face of the projection of the embossing roll is not particularly limited. For example, a round shape, an elliptical shape, a triangular shape, a quadrangular shape, a rhombic shape, or a pentagonal or more polygonal shape is acceptable. Shapes surrounded by these shapes are also acceptable. Combinations of these shapes are also acceptable.

An example of the embossing roll of the present disclosure will now be described with reference to the drawings. The example of the embossing roll of the present disclosure will be described below with reference to Fig. 3 to Fig. 5. However, the invention is not limited thereto.

Fig. 3 is a schematic view illustrating the example of the embossing roll of the present disclosure. As illustrated in Fig. 3, the embossing roll 200 includes a large number of projections 201A and projections 201B. The projections 201A and the projections 201B are disposed in the same shape, and the top faces of the projections 201A and the projections 201B have the same elliptical shape. In the embossing roll 200, recesses 203 are disposed between the projection 201A and the projection 201A adjacent to each other, between the projection 201A and the projection 201B adjacent to each other, and between the projection 201B and the projection 201B adjacent to each other. The projection group of the projections 201Ais arranged so that the orientations of the ellipses of the projections 201A are identical in the direction of rotating the embossing roll, and so that the orientations of the ellipses are identical on alternate lines. The projection group of the projections 201B is also disposed in an arrangement similar to the arrangement of the projection group of the proj ections 201A. The projection group of the projections 201A and the projection group of the projections 201B are disposed so that the arrangement orientations thereof alternate in each line in the rotation direction.

In the embossing roll 200, the projection group of the projections 201Ais disposed to have a distance P (i.e., a projection pitch P) between the projections adjacent to each other in the rotation direction, as illustrated in Fig. 3. As illustrated in Fig. 3, the distance P between the projections adjacent to each other in the rotation direction is a center distance between the ellipses. The center of the ellipse represents a point of intersection of the shortest diameter and the longest diameter.

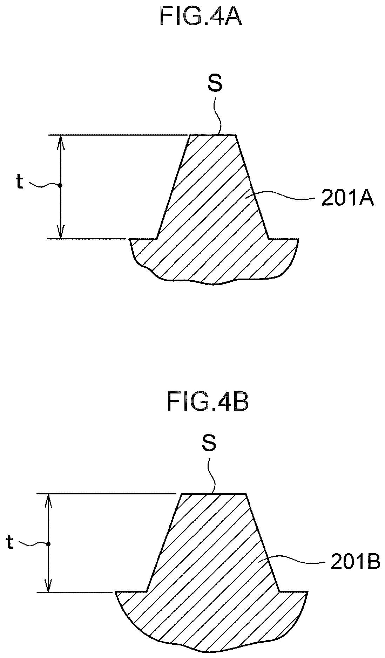

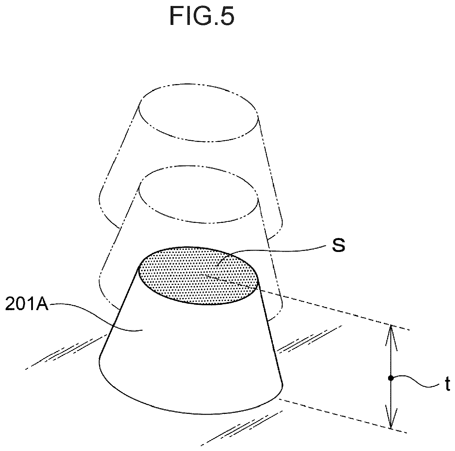

Fig. 4A is a cross-sectional view taken along the line A-A in the projection included in the embossing roll illustrated in Fig. 3. Specifically, the cross-sectional view taken along the line A-Ain the projection 201Aincluded in the embossing roll 200 is illustrated. Fig. 4B is a cross-sectional view taken along the line B-B in the projection included in the embossing roll illustrated in Fig. 3. Specifically, the cross-sectional view taken along the line B-B in the projection 201B included in the embossing roll 200 is illustrated. Fig. 5 is a perspective view of the projections included in the embossing roll illustrated in Fig. 3, viewed from the rotation direction. Specifically, the perspective view of the projections 201A of the embossing roll 200 illustrated in Fig. 3, viewed from the rotation direction, is illustrated. As illustrated in Fig. 4A, Fig. 4B, and Fig. 5, each of the projections 201A and the projections 201B has a taper angle. As illustrated in Fig. 4A, Fig. 4B, and Fig. 5, each of the projections 201A and the projections 201B has a depth t from the top face of each of the projections 201A and the projections 201B to the bottom face of each of the recesses 203, and has the area S of the top face.

In the embossing roll 200, the ratio (t/P) of the depth t to the bottom face of the recess 203 with respect to the distance P between projections 201A adjacent to each other in the rotation direction is preferably in the range described above. The emboss aspect ratio represented by the ratio (t/S) between the area S of the top face of the projection 201A and the depth t from the top face of the projection 201A to the bottom face of the recess 203 is preferably in the range described above. The depth t from the top face of the projection 201A to the bottom face of the recess 203 is not particularly limited as long as the emboss aspect ratio is in a range satisfying the range described above. The above descriptions have been given mainly with reference to the projections 201A. However, the same also applies to the projections 201B.

The embossing roll of the present disclosure is preferred for thermocompression-bonding the non-woven web for obtaining the spunbonded non-woven fabric and spunbonded non-woven fabric layered body of the present disclosure. The embossing roll of the present disclosure is not limited thereto, and can also be applied to a non-woven web other than the spunbonded non-woven fabric and the spunbonded non-woven fabric layered body as long as the non-woven web can be thermocompression-bonded.

### Examples

The spunbonded non-woven fabric of the present disclosure will be described below with reference to Examples. However, the spunbonded non-woven fabric of the present disclosure is not limited at all to the following embodiments.

In the following Examples, "%" represents "% by mass".

Physical property values and the like in Examples and Comparative Examples were measured by the following methods.

### (1) Basis Weight [g/m²]

Ten test pieces of 100 mm (machine direction: MD) × 100 mm (direction orthogonal to machine direction: CD) were cut from a spunbonded non-woven fabric. Places at which the test pieces were cut were set at ten places in the CD direction. Then, the mass[g] of each cut test piece was measured using an electronic balance scale (manufactured by Kensei Co., LTD.) under an environment of 20°C and a relative humidity of 50% RH. The average value of the masses of the test pieces was calculated. The calculated average value was converted into a mass [g] per m², which was rounded off to one decimal place to obtain a value, which was regarded as the basis weight [g/m²] of each non-woven fabric sample.

### (2) Thickness [mm]

Ten test pieces of 100 mm (MD) × 100 mm (CD) were cut from a spunbonded non-woven fabric. Places at which the test pieces were cut were set at places similar to the test pieces for measuring the basis weight. Then, the thickness [mm] of each cut test piece was measured by a method described in JIS L 1096: 2010, using a load-type thickness gauge (manufactured by OZAKI MFG. CO., LTD.). The average value of the thicknesses of the test pieces was calculated, and rounded off to one decimal place to obtain a value, which was regarded as the thickness [mm] of each non-woven fabric sample.

### [Evaluation of Flexibility]

### (3) WC (Compression Work) [gf· cm/cm²]

Two test pieces of 150 mm (MD) × 150 mm (CD) were cut from a non-woven fabric. Cutting places were set at two places in the CD direction. Then, the test pieces were subjected to a compression test at a compressive deformation velocity of 0.020 mm/sec and a maximum pressure of 50 gf/cm², using a compression test probe (a steel pressure plate having a circular plane having a compression area of 2 cm²), under an environment of 20°C and relative humidity of 50% RH as measurement conditions, by a compression testing machine KES-FB3-A manufactured by KATO TECH CO., LTD., to measure WC [gf·cm/cm²].

The average value of WC of the test pieces was calculated, and rounded off to two decimal places to obtain a value, which was regarded as WC [gf· cm/cm²] of each non-woven fabric sample.

### [Evaluation of Bulkiness]

### (4) TO (Thickness at Pressure of 0.5 gf/cm²) - TM (Thickness at Pressure of 50 gf/cm²) [mm]

Two test pieces of 150 mm (MD) × 150 mm (CD) were cut from a non-woven fabric. Cutting places were set at two places in the CD direction. Then, the test pieces were subjected to a compression test at a compressive deformation velocity of 0.020 mm/sec and a maximum pressure of 50 gf/cm², using a compression test probe (a steel pressure plate having a circular plane having a compression area of 2 cm²), under an environment of 20°C and relative humidity of 50% RH as measurement conditions, by a compression testing machine KES-FB3-A manufactured by KATO TECH CO., LTD., to measure TO [mm] and TM [mm].

The average value of TO [mm] and TM [mm] of the test pieces was calculated, and rounded off to two decimal places to obtain values, which were regarded as TO [mm] and TM [mm] of each non-woven fabric sample. The TO-TM [mm] of each non-woven fabric sample was calculated.

### [Evaluation of Bending Resistance]

### (5) Bending Resistance BR_{MD} and Bending Resistance BR_{CD}

The bending resistance (mm) of a spunbonded non-woven fabric was measured by performing a cantilever test according to the following method, thereby evaluating the flexural rigidity. Specifically, the measurement was performed in compliance with JIS-L1096: 2010, chapter 8.19.1 (the A method (45° cantilever method)).

5 sheets, each having a size of 2.5 cm (CD) × 15 cm (MD), were cut from the spunbonded non-woven fabric and used as test pieces for the machine direction (MD), and 5 sheets, each having a size of 2.5 cm (MD) × 15 cm (CD), were cut from the spunbonded non-woven fabric and used as test pieces for the cross direction (CD).

The test piece obtained was placed on a horizontal table that had a smooth surface and that was provided with a slope at an inclination of 45° at one end thereof, such that a shorter side of the test piece was positioned on the baseline of the scale. Then, the test piece was gently slid towards the slope by an appropriate method, and, when the center point of one end of the test piece contacted the slope, the position of the other end of the test piece on the scale was read.

The bending resistance is expressed as the distance (mm) for which the test piece has moved. The bending resistance was measured for the 5 sheets for the machine direction and the 5 sheets for the cross direction, and an average value of the bending resistance values was obtained for each of the machine direction and the cross direction. The average bending resistance in the machine direction was taken as BR_{MD}, and the average bending resistance in the cross direction was taken as BR_{CD}.

### <Example 1>

### (Lower Layer)

The following first component and the following second component were compositely melt-spun by spunbonding, and a lower-layer non-woven web formed of side-by-side type crimped fibers (hereinafter referred to as "crimped fibers A") was deposited on a movable trapping face. The side-by-side type crimped fibers have a first component/second component mass ratio of 40/60 and an average fiber diameter of 15 µm. The basis weight of the non-woven web was 11.4 g/m².

### -First Component of Crimped Fibers A-

A mixture of 1) a propylene-ethylene random copolymer having a melting point of 142°C and having an MFR of 60 g / 10 minutes and 2) a propylene homopolymer having a melting point of 162°C and having an MFR of 3 g / 10 minutes, at a mass ratio 1) : 2) of 96 : 4. The MFR is measured at a temperature of 230°C and a load of 2.16 kg according to ASTM D1238, and the same method is applied unless otherwise noted.)

### -Second Component of Crimped Fibers A-

Propylene-ethylene random copolymer having a melting point of 142°C and an MFR of 60 g/10 minutes.

### (Upper Layer)

The following first component and the following second component were compositely melt-spun by spunbonding, and an upper-layer non-woven web formed of side-by-side type crimped fibers (hereinafter referred to as "crimped fibers B") was deposited on the lower-layer non-woven web in an in-line manner to produce a non-woven web having a layered structure. The side-by-side type crimped fibers have a first component/second component mass ratio of 20/80 and an average fiber diameter of 15 µm. The basis weight of the non-woven web was 5.6 g/m².

### -First Component of Crimped Fibers B-

Propylene homopolymer having a melting point of 162°C and an MFR of 60 g/10 minutes

### -Second Component of Crimped Fibers B-

Propylene-ethylene random copolymer having a melting point 142°C and an MFR of 60 g/10 minutes

Then, the non-woven web having the layered structure was heat-sealed under the following embossment conditions by the following embossing roll, to obtain a spunbonded non-woven fabric layered body having a total basis weight of 17 g/m². The area ratio of a pressure bonding portion was 11%.

### -Embossing Roll-

Emboss area ratio: 11%
Emboss aspect ratio: 4.1 mm/mm²
Rockwell hardness of embossment base material: 37 HRC

### -Embossment Conditions-

Embossment temperature: 140°C
Embossment linear pressure: 784 N/cm

<Example 2>

A spunbonded non-woven fabric layered body was obtained in a similar manner to Example 1 except that the basis weight of a lower layer in the spunbonded non-woven fabric layered body was 13.4 g/m², the basis weight of an upper layer was 6.6 g/m², and a total basis weight was 20 g/m².

### <Example 3>

A spunbonded non-woven fabric layered body was obtained in a similar manner to Example 1 except that the basis weight of a lower layer in the spunbonded non-woven fabric layered body was 15.4 g/m², the basis weight of an upper layer was 7.6 g/m², and a total basis weight was 23 g/m².

### <Example 4>

A spunbonded non-woven fabric layered body was obtained in a similar manner to Example 2 except that the following embossing roll was used as an embossing roll.

### -Embossing Roll-

Emboss area ratio: 7%
Emboss aspect ratio: 3.0
Rockwell hardness of embossment base material: 36 HRC

### <Comparative Example 1>

A spunbonded non-woven fabric layered body was obtained in a similar manner to Example 1 except that the following embossing roll was used as an embossing roll.

### -Embossing Roll-

Emboss area ratio: 18%
Emboss aspect ratio: 1.9 mm/mm²
Rockwell hardness of embossment base material: 38 HRC

### <Comparative Example 2>

A spunbonded non-woven fabric layered body was obtained in a similar manner to Example 2 except that the following embossing roll was used as an embossing roll.

### -Embossing Roll-

Emboss area ratio: 18%
Emboss aspect ratio: 1.9 mm/mm²
Rockwell hardness of embossment base material: 38 HRC

### <Comparative Example 3>

A spunbonded non-woven fabric layered body was obtained in a similar manner to Example 1 except that the basis weight of a lower layer in the spunbonded non-woven fabric layered body was 20.0 g/m², the basis weight of an upper layer was 10.0 g/m², a total basis weight was 30 g/m², the following embossing roll was used as an embossing roll, and the following embossment conditions were set. The area ratio of a pressure bonding portion was 11%. In this case, the spunbonded non-woven fabric layered body was obtained; however, since the hardness of an embossment base material was insufficient, a facility defect was caused, and it was impossible to obtain sufficient mass production stability.

### -Embossing Roll-

Emboss area ratio: 11%
Emboss aspect ratio: 4.1 mm/mm²
Rockwell hardness of embossment base material: 32 HRC

### -Embossment Conditions-

Embossment temperature: 140°C
Embossment linear pressure: 343 N/cm

### <Comparative Example 4>

A spunbonded non-woven fabric layered body was obtained in a similar manner to Example 1 except that an upper layer in the spunbonded non-woven fabric layered body was a non-woven web including non-crimped fibers (referred to as "non-crimped fibers A") using only a second component, and a lower layer was a non-woven web including non-crimped fibers (referred to as "non-crimped fibers B") using only a second component.

### -Component of Non-Crimped Fibers A-

Propylene-ethylene random copolymer having a melting point of 142°C and an MFR of 60 g/10 minutes

### -Component of Non-Crimped Fibers B-

Propylene-ethylene random copolymer having a melting point of 142°C and an MFR of 60 g/10 minutes

### <Comparative Example 5>

A spunbonded non-woven fabric layered body was obtained in a similar manner to Example 2 except that an upper layer in the spunbonded non-woven fabric layered body was a non-woven web including non-crimped fibers (referred to as "non-crimped fibers A") using the following component, and a lower layer was a non-woven web including non-crimped fibers (referred to as "non-crimped fibers B") using the following component.

### -Component of Non-Crimped Fibers A-

Propylene-ethylene random copolymer having a melting point of 142°C and an MFR of 60 g/10 minutes

### -Component of Non-Crimped Fibers B-

Propylene-ethylene random copolymer having a melting point of 142°C and an MFR of 60 g/10 minutes

### <Comparative Example 6>

A spunbonded non-woven fabric layered body was obtained in a similar manner to Example 2 except that an upper layer in the spunbonded non-woven fabric layered body was a non-woven web including non-crimped fibers (referred to as "non-crimped fibers C") using the following component, a lower layer was a non-woven web including non-crimped fibers (referred to as "non-crimped fibers D") using the following component, and embossment conditions were the following conditions.

### -Component of Non-Crimped Fibers C-

Propylene homopolymer having a melting point of 162°C and an MFR of 60 g/10 minutes

### -Component of Non-Crimped Fibers D-

Propylene homopolymer having a melting point of 162°C and an MFR of 60 g/10 minutes

### -Embossment Conditions-

Embossment temperature: 160°C
Embossment linear pressure: 784 N/cm

### <Comparative Example 7>

A spunbonded non-woven fabric layered body was obtained in a similar manner to Example 1 except that the basis weight of a lower layer in the spunbonded non-woven fabric layered body was 10.0 g/m², the basis weight of an upper layer was 10.0 g/m², a total basis weight was 20 g/m², and the upper layer was a non-woven web including non-crimped fibers (referred to as "non-crimped fibers A") using the following component.

### -Component of Non-Crimped Fibers A-

Propylene-ethylene random copolymer having a melting point of 142°C and an MFR of 60 g/10 minutes

**[Table 1]**

| | | Example 1 | Example 2 | Example 3 | Example 4 | Comparativ e Example 1 | Comparativ e Example 2 | Comparativ e Example 3 | Comparativ e Example 4 | Comparativ e Example 5 | Comparativ e Example 6 | Comparativ e Example 7 |
|---|---|---|---|---|---|---|---|---|---|---|---|---|
| Embossing Roll | Emboss Area Ratio (%) | 11 | 11 | 11 | 7 | 18 | 18 | 11 | 11 | 11 | 11 | 11 |
| | Emboss Aspect Ratio (mm/mm²) | 4.1 | 4.1 | 4.1 | 3.0 | 1.9 | 1.9 | 4.1 | 4.1 | 4.1 | 4.1 | 4.1 |
| | Rockwell Hardness of Embossment Base Material (HRC) | 37 | 37 | 37 | 36 | 38 | 38 | 32 | 37 | 37 | 37 | 37 |
| Evaluations | Kind of Fibers (Upper Layer/Lower Layer) | Crimped/ Crimped | Crimped/ Crimped | Crimped/ Crimped | Crimped/ Crimped | Crimped/C rimped | Crimped/C rimped | Crimped/C rimped | Non-Crimp ed/Non-Cri mped | Non-Crimp ed/Non-Cri mped | Non-Crimp ed/Non-Cri mped | Non-Crimp ed/Crimped |
| | Total Basis Weight W (g/m²) | 17 | 20 | 23 | 20 | 17 | 20 | 30 | 17 | 20 | 20 | 20 |
| | Thickness t (mm) | 0.45 | 0.47 | 0.44 | 0.44 | 0.26 | 0.27 | 0.41 | 0.23 | 0.28 | 0.28 | 0.33 |
| | WC (gf-cm/cm²) | 0.24 | 0.49 | 0.35 | 0.30 | 0.18 | 0.19 | 0.26 | 0.14 | 0.16 | 0.16 | 0.19 |
| | TO-TM (mm) | 0.31 | 0.53 | 0.34 | 0.33 | 0.20 | 0.21 | 0.20 | 0.13 | 0.17 | 0.16 | 0.29 |
| | BR_{MD} (mm) | 25 | 24 | 31 | 23 | 26 | 35 | 34 | 33 | 38 | 55 | 32 |
| | BR_{CD} (mm) | 16 | 17 | 17 | 16 | 18 | 24 | 25 | 19 | 23 | 36 | 20 |
| | Productivity | Favorable | Favorable | Favorable | Favorable | Favorable | Favorable | Poor | Favorable | Favorable | Favorable | Favorable |

As set forth in Table 1, each Example exhibits a basis weight W, a thickness t, WC measured by a KES method, TO-TM measured by the KES method, a bending resistance BR_{MD}, and a bending resistance BR_{CD} within the ranges of the spunbonded non-woven fabric (non-woven fabric layered body) of the present disclosure, and is found to be bulky and excellent in flexibility and have small flexural rigidity.

### <Comparative Examples 8 and 9>

Spunbonded non-woven fabrics of Comparative Examples 8 and 9 are commercially available products that are composed of non-crimped fibers and that have bulkiness imparted by subjecting spunbonded non-woven fabrics after embossing treatment to treatment using a processing apparatus or the like. The results obtained are indicated in Table 2.

**[Table 2]**

| | | Comparative Example 8 | Comparative Example 9 |
|---|---|---|---|
| Evaluations | Kind of Fibers | Non-Crimped | Non-Crimped |
| | Total Basis Weight W (g/m²) | 20 | 16 |
| | Thickness t (mm) | 0.91 | 0.53 |
| | WC (gf·cm/cm²) | 0.80 | 0.54 |
| | TO-TM (mm) | 0.90 | 0.51 |
| | BR_{MD} (mm) | 53 | 41 |
| | BR_{CD} (mm) | 35 | 23 |

As is understood from Table 2, the spunbonded non-woven fabrics of Comparative Examples 8 and 9, which were subjected to secondary processing treatment, exhibited a higher flexural rigidity as indicated by a higher bending resistance than those of Examples although the spunbonded non-woven fabrics exhibited favorable bulkiness and flexibility as indicated by high WC and TO-TM values. Further, there is a tendency that an increase in bulkiness and flexibility would significantly increase bending resistance, and prevents obtainment of a desired small flexural rigidity, as demonstrated in Comparative Example 8.

Therefore, in conventional spunbonded non-woven fabrics, favorable bulkiness and flexibility, and a small flexural rigidity are in a trade-off relationship, as demonstrated in Comparative Examples 8 and 9, and it has been difficult to simultaneously achieve both characteristics.

In contrast, the spunbonded non-woven fabrics according to the Examples were able to achieve excellent bulkiness and flexibility as well as small flexural rigidity.

The reference characters described in each drawing are as follows.
- 53, 200: Embossing roll
- 201A, 201B: Projection
- 203: Recess
- 60: Spunbonded non-woven fabric layered body

## Claims

1. A spunbonded non-woven fabric comprising a fiber of a thermoplastic polymer, the fabric having a thickness t, a compression work WC measured in a compression test by a KES method, a thickness TO measured in the compression test by the KES method at a pressure of 0.5 gf/cm², a thickness TM measured in the compression test by the KES method at a pressure of 50 gf/cm², a basis weight W, and a bending resistance BR_{MD} in a machine direction (MD) and a bending resistance BR_{CD} in a cross direction as measured in compliance with a 45° cantilever method defined in JIS-L1096: 2010, which satisfy the following conditions (A) to (F):
(A): t ≥ 0.30mm;
(B): WC ≥ 0.22 gf·cm/cm²;
(C): TO-TM ≥ 0.25 mm;
(D): W ≤ 30 g/m^{2;}
(E): BR_{MD} ≤ 40 mm; and
(F): BR_{CD} ≤ 25 mm,
wherein the fiber comprises a crimped fiber and
the spunbonded non-woven fabric is obtainable by a method comprising:
melt-spinning a thermoplastic polymer to form a continuous fiber assembly;
depositing the formed continuous fiber assembly on a movable trapping member to form a non-woven web; and
performing thermocompression bonding of the formed non-woven web by an embossing roll at which a projection and a recess are disposed, and in which an area ratio of the projection is from 5% to 18%, an emboss aspect ratio represented by a ratio of a depth from a top face of the projection to a bottom face of the recess with respect to an area of the top face of the projection is from 2.5 mm/mm² to 7.0 mm/mm², and a base material has a Rockwell hardness of 35 HRC or more.

2. The spunbonded non-woven fabric according to claim 1, further comprising a pressure bonding portion and a non- pressure bonding portion.

3. The spunbonded non-woven fabric according to claim 2, wherein an area ratio of the pressure bonding portion is from 5% to 18%.

4. The spunbonded non-woven fabric according to any one of claims 1 to 3, wherein the thermoplastic polymer comprises an olefinic polymer.

5. The spunbonded non-woven fabric according to claim 4, wherein the olefinic polymer comprises a propylene-based polymer.

6. The spunbonded non-woven fabric according to any one of claims 1 to 5, wherein the fiber has an average fiber diameter of from 5 µm to 20 µm.

7. The spunbonded non-woven fabric according to any one of claims 1 to 6, which is used in a sanitation material.

8. The spunbonded non-woven fabric according to any one of claims 1 to 7, wherein the spunbonded non-woven fabric is a spunbonded non-woven fabric layered body.

9. A method of manufacturing the spunbonded non-woven fabric according to any one of claims 1 to 8, comprising:
melt-spinning a thermoplastic polymer to form a continuous fiber assembly;
depositing the formed continuous fiber assembly on a movable trapping member to form a non-woven web; and
performing thermocompression bonding of the formed non-woven web by an embossing roll at which a projection and a recess are disposed, and in which an area ratio of the projection is from 5% to 18%, an emboss aspect ratio represented by a ratio of a depth from a top face of the projection to a bottom face of the recess with respect to an area of the top face of the projection is from 2.5 mm/mm² to 7.0 mm/mm², and a base material has a Rockwell hardness of 35 HRC or more.

10. The method of manufacturing the spunbonded non-woven fabric according to claim 9, wherein the base material of the embossing roll has a Rockwell hardness of from 35 HRC to 50 HRC.

11. The method of manufacturing the spunbonded non-woven fabric according to claim 9 or 10, wherein a ratio of the depth to a distance between projections adjacent to each other in a rotation direction is from 0.4 mm/mm to 1.0 mm/mm.

12. The method of manufacturing the spunbonded non-woven fabric according to any one of claims 9 to 11, wherein the non-woven web is a non-woven web with at least two layers.

13. An embossing roll for performing thermocompression bonding of a non-woven web,
wherein a projection and a recess are disposed on the embossing roll, an area ratio of the projection is from 5% to 18%, an emboss aspect ratio represented by a ratio of a depth from a top face of the projection to a bottom face of the recess with respect to an area of the top face of the projection is from 2.5 mm/mm² to 7.0 mm/mm², and a base material has a Rockwell hardnesses of 35 HRC or more.

14. The embossing roll according to claim 13, wherein the base material of the embossing roll has a Rockwell hardness of from 35 HRC to 50 HRC.

15. The embossing roll according to claim 13 or 14, wherein a ratio of the depth to a distance between projections adjacent to each other in a rotation direction is from 0.4 mm/mm to 1.0 mm/mm.

## Patentansprüche

1. Spinnvliesstoff, umfassend eine Faser eines thermoplastischen Polymers, wobei der Stoff eine Dicke t, eine Kompressionsarbeit WC, gemessen in einem Kompressionstest nach einem KES-Verfahren, eine Dicke TO, gemessen in dem Kompressionstest nach dem KES-Verfahren bei einem Druck von 0.5 gf/cm², eine Dicke TM, gemessen in dem Kompressionstest nach dem KES-Verfahren bei einem Druck von 50 gf/cm², ein Flächengewicht W und einen Biegewiderstand BR_{MD} in einer Maschinenrichtung (MD) und einen Biegewiderstand BR_{CD} in einer Querrichtung, gemessen gemäß einer in JIS-L1096: 2010 definierten 45°-Cantilever-Methode, die die folgenden Bedingungen (A) bis (F) erfüllen:
(A): t ≥ 0,30mm;
(B): WC ≥ 0,22 gf·cm/cm²;
(C): TO-TM ≥ 0,25 mm;
(D): W ≤ 30 g/m^{2;}
(E): BR_{MD} ≤ 40 mm; und
(F): BR_{CD} ≤ 25 mm,
wobei die Faser eine gekräuselte Faser umfasst und
der Spinnvliesstoff durch ein Verfahren erhältlich ist, umfassend:
das Schmelzspinnen eines thermoplastischen Polymers, um eine Endlosfaseranordnung zu bilden;
das Ablegen der gebildeten Endlosfaseranordnung auf einem beweglichen Fangelement, um eine Vliesstoffbahn zu bilden; und
das Durchführen einer Thermokompressionsverbindung der gebildeten Vliesstoffbahn mittels einer Prägewalze, an der ein Vorsprung und eine Vertiefung angeordnet sind, und bei der ein Flächenanteil des Vorsprungs 5% bis 18% beträgt, ein Prägeseitenverhältnis, dargestellt durch ein Verhältnis von einer Tiefe von einer Oberseite des Vorsprungs bis zu einer Unterseite der Vertiefung zu einer Fläche der Oberseite des Vorsprungs, 2,5 mm/mm² bis 7,0 mm/mm² beträgt, und ein Basismaterial eine Rockwell-Härte von 35 HRC oder mehr aufweist.

2. Spinnvliesstoff gemäß Anspruch 1, ferner umfassend einen Druckverbindungsbereich und einen Nicht-Druckverbindungsbereich.

3. Spinnvliesstoff gemäß Anspruch 2, wobei ein Flächenanteil des Druckverbindungsbereichs 5% und 18% beträgt.

4. Spinnvliesstoff gemäß einem der Ansprüche 1 bis 3, wobei das thermoplastische Polymer ein olefinisches Polymer umfasst.

5. Spinnvliesstoff gemäß Anspruch 4, wobei das olefinische Polymer ein propylenbasiertes Polymer umfasst.

6. Spinnvliesstoff gemäß einem der Ansprüche 1 bis 5, wobei die Faser einen durchschnittlichen Faserdurchmesser von 5 µm bis 20 µm aufweist.

7. Spinnvliesstoff gemäß einem der Ansprüche 1 bis 6, der in einem Sanitärmaterial verwendet wird.

8. Spinnvliesstoff gemäß einem der Ansprüche 1 bis 7, wobei der Spinnvliesstoff ein Spinnvlies-Schichtkörper ist.

9. Verfahren zur Herstellung des Spinnvliesstoffs gemäß einem der Ansprüche 1 bis 8, umfassend:
das Schmelzspinnen eines thermoplastischen Polymers, um eine Endlosfaseranordnung zu bilden;
das Ablegen der gebildeten Endlosfaseranordnung auf einem beweglichen Fangelement, um eine Vliesstoffbahn zu bilden; und
das Durchführen einer Thermokompressionsverbindung der gebildeten Vliesstoffbahn mittels einer Prägewalze, an der ein Vorsprung und eine Vertiefung angeordnet sind, und bei der ein Flächenanteil des Vorsprungs 5% bis 18% beträgt, ein Prägeseitenverhältnis, dargestellt durch ein Verhältnis von einer Tiefe von einer Oberseite des Vorsprungs bis zu einer Bodenseite der Vertiefung zu einer Fläche der Oberseite des Vorsprungs, 2,5 mm/mm² bis 7,0 mm/mm² beträgt, und ein Basismaterial eine Rockwell-Härte von 35 HRC oder mehr aufweist.

10. Verfahren zur Herstellung des Spinnvlieses gemäß Anspruch 9, wobei das Basismaterial der Prägewalze eine Rockwell-Härte von 35 HRC bis 50 HRC aufweist.

11. Verfahren zur Herstellung eines Spinnvlieses gemäß Anspruch 9 oder 10, wobei ein Verhältnis von der Tiefe zu einem Abstand zwischen in Drehrichtung nebeneinander liegenden Vorsprüngen 0,4 mm/mm bis 1,0 mm/mm beträgt.

12. Verfahren zur Herstellung des Spinnvlieses gemäß einem der Ansprüche 9 bis 11, wobei die Vliesstoffbahn eine Vliesstoffbahn mit mindestens zwei Schichten ist.

13. Prägewalze zum Durchführen einer Thermokompressionsverbindung einer Vliesstoffbahn,
wobei ein Vorsprung und eine Vertiefung auf der Walze angeordnet sind, ein Flächenanteil des Vorsprungs 5% bis 18% beträgt, ein Prägeseitenverhältnis, dargestellt durch ein Verhältnis von einer Tiefe von einer Oberseite des Vorsprungs bis zu einer Bodenseite der Vertiefung zu einer Fläche der Oberseite des Vorsprungs, 2,5 mm/mm² bis 7,0 mm/mm² beträgt, und ein Basismaterial eine Rockwell-Härte von 35 HRC oder mehr aufweist.

14. Prägewalze gemäß Anspruch 13, wobei das Basismaterial der Prägewalze eine Rockwellhärte von 35 HRC bis 50 HRC aufweist.

15. Prägewalze gemäß Anspruch 13 oder 14, wobei das Verhältnis von der Tiefe zu einem Abstand zwischen in Drehrichtung nebeneinander liegenden Vorsprüngen 0,4 mm/mm bis 1,0 mm/mm beträgt.

## Revendications

1. Tissu non tissé filé-lié comprenant une fibre d'un polymère thermoplastique, le tissu présentant une épaisseur t, une charge de travail de compression WC mesurée lors d'un essai de compression par un procédé KES, une épaisseur TO mesurée lors de l'essai de compression par le procédé KES à une pression de 0,5 gf/cm², une épaisseur TM mesurée lors de l'essai de compression par le procédé KES à une pression de 50 gf/cm², un poids de base W, et une rigidité à la flexion BR_{MD} dans un sens machine (MD) et une rigidité à la flexion BR_{CD} dans une direction transversale telles que mesurées conformément à un procédé de 45° en porte-à-faux défini dans JIS-L1096:2010, qui remplissent les conditions (A) à (F) suivantes :
(A): t ≥ 0,30mm;
(B): WC ≥ 0,22 gf·cm/cm²;
(C): TO-TM ≥ 0,25 mm;
(D): W ≤ 30 g/m^{2;}
(E): BR_{MD} ≤ 40 mm; et
(F): BR_{CD} ≤ 25 mm,
dans lequel la fibre comprend une fibre crêpée et
le tissu non tissé filé-lié peut être obtenu par un procédé comprenant :
le filage par fusion d'un polymère thermoplastique pour former un ensemble fibre continu ;
le dépôt de l'ensemble fibre continu formé sur un élément de pinçage mobile pour former une bande non tissée ; et
la réalisation d'une liaison par thermocompression de la bande non tissée formée par un rouleau gaufreur sur lequel une saillie et un évidement sont disposés, et dans lequel un rapport de surface de la saillie est de 5 % à 18 %, un rapport d'aspect de gaufrage représenté par un rapport d'une profondeur d'une face supérieure de la saillie à une face inférieure de l'évidement par rapport à une surface de la face supérieure de la saillie est de 2,5 mm/mm² à 7,0 mm/mm², et un matériau de base présente une dureté Rockwell de 35 HRC ou plus.

2. Tissu non tissé filé-lié selon la revendication 1, comprenant en outre une partie de liaison par pression et une partie de liaison sans pression.

3. Tissu non tissé filé-lié selon la revendication 2, dans lequel un rapport de surface de la partie de liaison par pression est de 5 % à 18 %.

4. Tissu non tissé filé-lié selon l'une quelconque des revendications 1 à 3, dans lequel le polymère thermoplastique comprend un polymère oléfinique.

5. Tissu non tissé filé-lié selon la revendication 4, dans lequel le polymère oléfinique comprend un polymère à base de propylène.

6. Tissu non tissé filé-lié selon l'une quelconque des revendications 1 à 5, dans lequel la fibre présente un diamètre de fibre moyen de 5 µm à 20 µm.

7. Tissu non tissé filé-lié selon l'une quelconque des revendications 1 à 6, qui est utilisé dans un matériau d'assainissement.

8. Tissu non tissé filé-lié selon l'une quelconque des revendications 1 à 7, dans lequel le tissu non tissé filé-lié est un corps stratifié de tissu non tissé filé-lié.

9. Procédé de fabrication du tissu non tissé filé-lié selon l'une quelconque des revendications 1 à 8, comprenant :
le filage par fusion d'un polymère thermoplastique pour former un ensemble fibre continu ;
le dépôt de l'ensemble fibre continu formé sur un élément de pinçage mobile pour former une bande non tissée ; et
la réalisation d'une liaison par thermocompression de la bande non tissée formée par un rouleau gaufreur sur lequel une saillie et un évidement sont disposés, et dans lequel un rapport de surface de la saillie est de 5 % à 18 %, un rapport d'aspect de gaufrage représenté par un rapport d'une profondeur d'une face supérieure de la saillie à une face inférieure de l'évidement par rapport à une surface de la face supérieure de la saillie est de 2,5 mm/mm² à 7,0 mm/mm², et un matériau de base présente une dureté Rockwell de 35 HRC ou plus.

10. Procédé de fabrication du tissu non tissé filé-lié selon la revendication 9, dans lequel le matériau de base du rouleau gaufreur présente une dureté Rockwell de 35 HRC à 50 HRC.

11. Procédé de fabrication du tissu non tissé filé-lié selon la revendication 9 ou la revendication 10, dans lequel un rapport de la profondeur à une distance entre des saillies adjacentes les unes aux autres dans une direction de rotation est de 0,4 mm/mm à 1,0 mm/mm.

12. Procédé de fabrication du tissu non tissé filé-lié selon l'une quelconque des revendications 9 à 11, dans lequel la bande non tissée est une bande non tissée avec au moins deux couches.

13. Rouleau gaufreur pour réaliser une liaison par thermocompression d'une bande non tissée,
dans lequel une saillie et un évidement sont disposés sur le rouleau gaufreur, un rapport de surface de la saillie est de 5 % à 18 %, un rapport d'aspect de gaufrage représenté par un rapport d'une profondeur d'une face supérieure de la saillie à une face inférieure de l'évidement par rapport à une surface de la face supérieure de la saillie est de 2,5 mm/mm² à 7,0 mm/mm², et un matériau de base présente une dureté Rockwell de 35 HRC ou plus.

14. Rouleau gaufreur selon la revendication 13, dans lequel le matériau de base du rouleau gaufreur présente une dureté Rockwell de 35 HRC à 50 HRC.

15. Rouleau gaufreur selon la revendication 13 ou la revendication 14, dans lequel un rapport de la profondeur à une distance entre des saillies adjacentes les unes aux autres dans une direction de rotation est de 0,4 mm/mm à 1,0 mm/mm.
